## Europäisches Patentamt
## European Patent Office
## Office européen des brevets

(19)

(11) Publication number: **0 035 874**
**B1**

(12) **EUROPEAN PATENT SPECIFICATION**

(45) Date of publication of patent specification: **18.07.84**

(51) Int. Cl.³: **B 62 B 5/06, B 62 D 53/08**

(21) Application number: **81300915.6**

(22) Date of filing: **05.03.81**

(54) Traction device for a towed vehicle.

(30) Priority: **06.03.80 AU 2667/80**

(43) Date of publication of application:
**16.09.81 Bulletin 81/37**

(45) Publication of the grant of the patent:
**18.07.84 Bulletin 84/29**

(84) Designated Contracting States:
**BE CH DE FR GB IT LI LU NL**

(56) References cited:
**EP - A - 0 003 164**
**US - A - 3 269 740**
**US - A - 3 937 479**

(73) Proprietor: **Morris, Lionel Graham**
**17 Ferguson Avenue**
**Myrtle Bank South Australia (AU)**

(72) Inventor: **Morris, Lionel Graham**
**17 Ferguson Avenue**
**Myrtle Bank South Australia (AU)**

(74) Representative: **Harrison, David Christopher et al,**
**MEWBURN ELLIS & CO 2/3 Cursitor Street**
**London EC4A 1BQ (GB)**

Courier Press, Leamington Spa, England.

Description

This invention relates to traction jockey wheels of a type useful for supporting and assisting movement of towed vehicles such as caravans or trailers.

I have developed wheels of this type some aspects of which have been subject of previous patent applications and granted patents such as US—A—4227706 (EP—A—0003164) include a pawl and ratchet wheel in which the ratchet wheel is co-axially secured to a ground engageable wheel and preferably there is an adjustably positioned pawl secured to a supporting frame and a second adjustably positioned pawl secured to an operating lever arm which in itself is pivotally secured about an axis co-axial with the ratchet wheel.

Both of the pawls are adjustably positioned so that in one position, movement of the operating lever arm can effect drive of the ratchet wheel in a first direction about its axial support and thereby cause the traction wheel to rotate and hence any supported towed vehicle and by otherwise positioning each of the pawls, movement of the operating lever arm can be made to effect rotation of the ratchet wheel and hence the traction wheel in an opposite direction.

Such a drive mechanism can be duplicated so that there can be two ground engageable traction wheels and by having these separately rotatable and separate pawls for each of the ratchet wheels, a differential effect providing for ease in steerability can be achieved.

This differential effect can be achieved with drive on each wheel so that there is advantage in a two wheel arrangement although the drive mechanism is not directed exclusively either to a single wheel or to a dual wheel system.

The problem to which this present invention is directed relates to a difficulty that can be experienced when using either of the above mechanisms.

If in any instance, the towed vehicle commences to move under its own impetus in the direction that is otherwise selected for the pawls then there is no inhibition by reason of the drive mechanism against such movement.

This can perhaps be better understood by appreciating the problem that can occur with a large caravan which is pulled by using the traction jockey wheel mechanism to the peak of a hill but as the hill is reached, commences under its own weight to move down the hill.

In this circumstance, neither of the ratchet settings of the pawls would inhibit this movement and a dangerous situation could arise if the person operating the traction jockey wheel should happen to fall. Then, there is a real possibility that the vehicle could proceed without his guidance and he in fact could be in danger of being hit or even run over by the vehicle.

There has been proposed in US—A—3937479, as acknowledged in the preamble of claim 1, a similar mechanism for a single jockey (or "dolley") wheel where additionally a brake for the wheel is provided and means whereby that brake can be controlled.

According to the present invention the brake control arrangement is such that in a first selected range of positions of the lever arm, the brake means assume a non-braking position, and in at least one further position of the lever arm the brake means assume a braking position with respect to the traction wheel or wheels.

The brake-operating positions of the lever arm relate therefore to the positions of the lever arm with respect to the support frame of the traction jockey wheel independently of what direction the lever arm may be steering in.

They could however include rotation of the lever arm about its elongate axis against a spring return pressure or could include in a preferred instance enabling a braking means to assume an effective braking position when the lever arm is in an uppermost relative position to the support frame or in a lowermost position, in its pivoting about a horizontal axis.

The more important of these positions is the lowermost position in that if a person should happen to fall then the lever arm is allowed to fall also and upon this reaching a lowermost position that is, typically, with the lever arm engaging the ground then clearly this will allow the brake to engage and impede an otherwise dangerous situation developing.

However, there is value in alternatively having the lever arm uppermost with a braking effect in that this can be an assured storage position and the traction wheels are then effectively in a locked condition.

This invention can apply in either of the cases where either there is a single traction wheel or .there are two traction wheels co-axially supported.

Indeed there is no limit to the number of wheels that can be co-axially supported although two has been found to be a preferred number.

With the two traction wheels, in a preferred instance, there can either be a separate mechanism for each wheel including a separate braking means independently operating or there can be a commonly applied braking member as will be illustrated in the preferred embodiment.

For a better understanding of this invention it will now be described with the assistance of drawings in which:—

FIG. 1 is a perspective view of a traction jockey wheel according to a first preferred embodiment having a part of one of the traction wheels cutaway for clearer visibility;

FIG. 2 is one cross-sectional elevation of the traction jockey wheel of Fig. 1;

FIG. 3 is a cross-sectional elevation taken parallel to that of Fig. 2 and showing the operating lever arm in a position whereby the braking means are in a non-braking position;

FIG. 4 is a view identical with that in Fig. 3 except that the lever arm is shown in a position in which the braking means are in a braking position; and

FIG. 5 is a side elevation of a second embodiment providing the mechanism and lever arm assembly for a single traction jockey wheel.

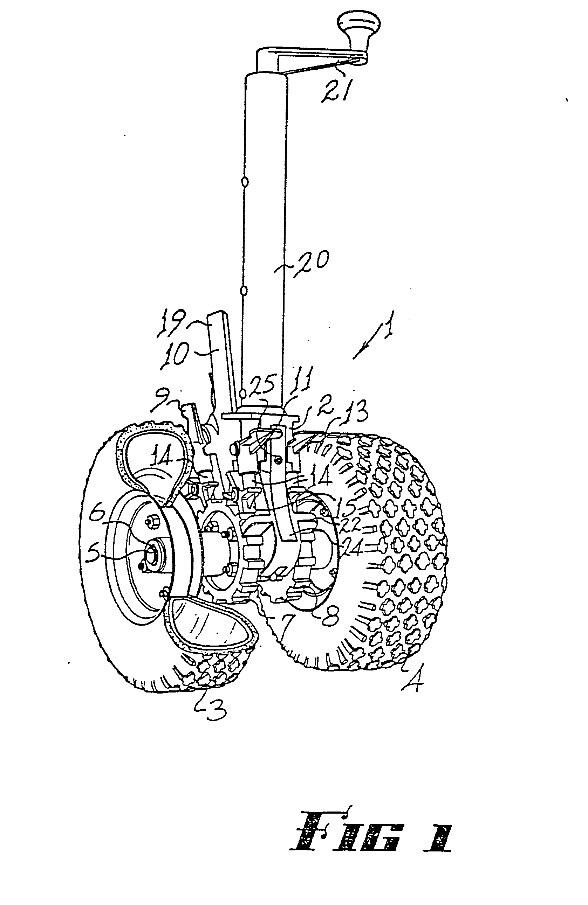

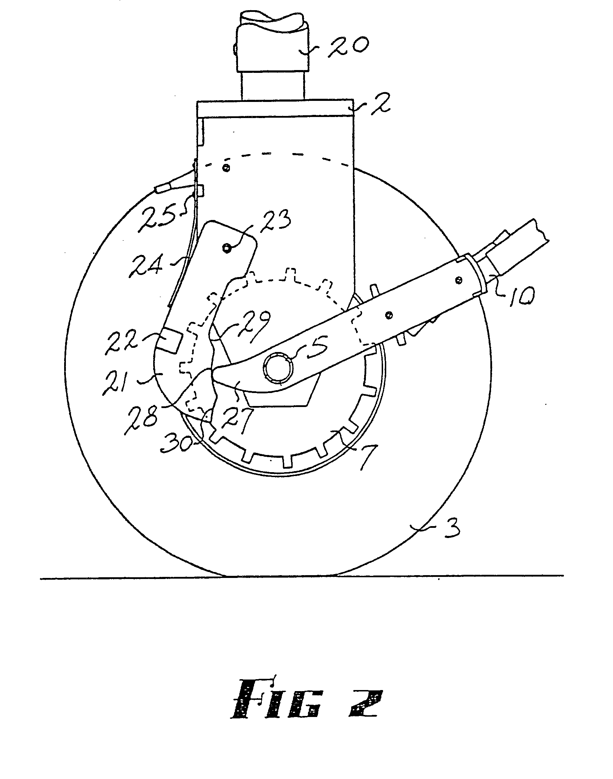

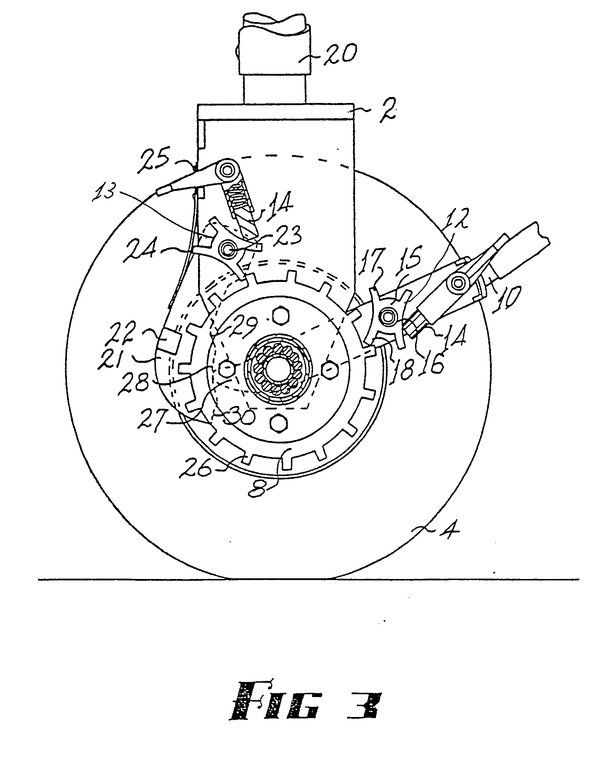

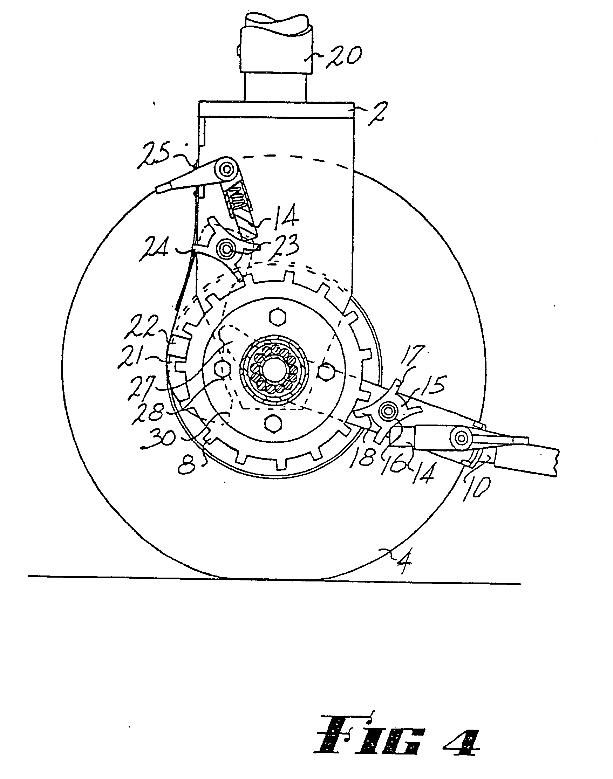

Referring now in detail to the drawings and referring firstly to the first preferred embodiment as illustrated in Figs. 1 to 4 this includes a traction jockey wheel 1 which includes a support frame 2 and supported from this two traction wheels 3 and 4 which are independently rotatable each on a common axle 5 and each held in position by a spring washer 6.

Secured co-axially with respect to each of the traction wheels 3 and 4 are ratchet wheels 7 and 8 so arranged that each of the ratchet wheels are co-axial with the respective traction wheel and secured so as to rotate co-axially therewith.

Associated with the ratchet wheels 7 and 8 are spring loaded pawls which are adjustably supported in the case of pawl 9 by a lever arm assembly 10 and in the case of pawl 11 by the support frame 2. A pawl 12 equivalent to pawl 9 but in respect of wheel 8 supported by lever arm assembly 10 and pawl 13 equivalent to pawl 11 is adjustably supported by support frame 2.

The lever arm assembly is pivotally mounted co-axially with the traction wheels, so as to be pivotable about a horizontal axis.

Each of the pawls includes a member 15 pivotally supported with respect to the respective mounts and also includes a spring loaded plunger 14 which acts against member 15 which includes at an upper edge a concave face 16 and at a lower edge fingers 17 and 18.

It will be seen by the use of this arrangement that by co-operatively adjusting each of the pawls in position, so that each will provide a ratchet freedom in one direction and a lock against movement of the ratchet wheel in the other then this will ensure forward or reverse movement depending upon the position of adjustment selected when the lever arm assembly 10 is moved relative to the support frame 2.

It is to be noted that in Fig. 1 the lever arm assembly includes a spigot 19 to which an extension comprising a hollow lever member can be secured to provide substantial leverage and steering control when necessary.

The support frame 2 further includes an extendible stem 20 and a control handle 21 controlling the degree of extension of the stem 20.

To provide a braking effect when necessary there is provided a braking member 21 which includes a tooth 22 and which is pivotally supported with respect to the support frame 2 about an axis at 23 which coincides with the axis of the member 15 of the pawls 13 where this secured to the support frame 2.

A spring member 24 is secured to the support frame 2 at 25 and is so arranged so as to bias the movement of the brake member 21 so that it will be urged into a braking position that is with the tooth 22 interlocking with respect to the teeth 26 of the ratchet wheel 8.

This of course is repeated in the same manner with ratchet wheel 7.

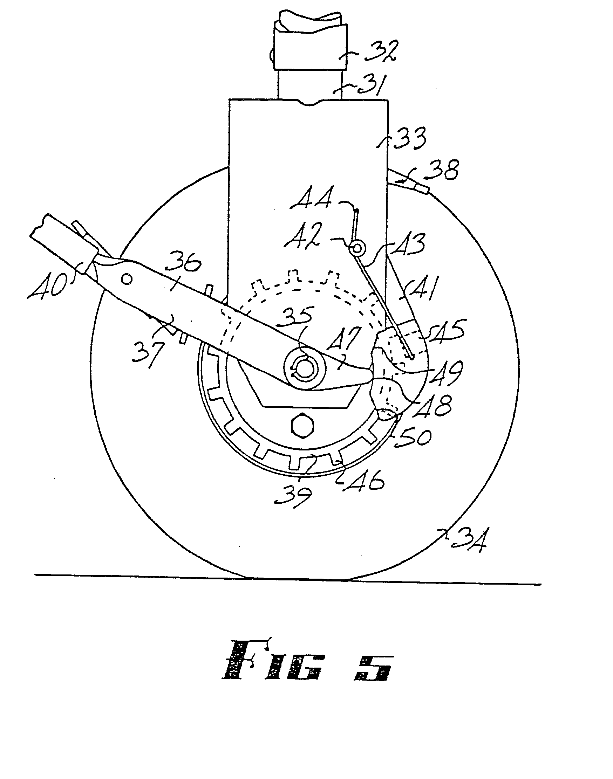

The interlocking position of the braking member 21 is however controlled by the effective interrelationship of the leg 27 which is secured at an end of the lever arm arrangement 10 and this engages against a cam base 28 which is so shaped that when it is in the position as shown in Fig. 3 this will hold the tooth 22 from interlocking and therefore in a non-braking position but when it is moved into the position at either 29 or 30 then this will allow for the tooth 22 to move to an interlocking position and hence a braking position with respect to the traction wheel 4.

This position is most clearly shown in Fig. 4 in which the lever arm assembly 10 is shown in a lowermost position whereupon allowing tooth 22 under the influence of spring 24 to assume an interlocking position with respect to the teeth 26 of the ratchet wheel 8.

It will be seen from this that there are a range of positions over an operating range that the lever arm assembly 10 can work through but that this can then be shifted to a lowermost position which will not be used when normally effecting a drive of the traction wheels or to an uppermost position as shown in Fig. 1 which is generally, a storage position which is also a position not normally assumed when the wheels are being driven.

Now referring to the second embodiment as shown in Fig. 5, this relates to a mechanism which is used in conjunction with a single traction wheel.

Accordingly the support frame 31 includes an extendible stem 32 only part of which is shown for sake of simplicity and a yoke 33 which extends with legs to support the frame 31 on both sides of the traction wheel 34 by engaging support axle 35.

A lever arm assembly 36 with appropriately adjustable pawls 37 and 38 which are not fully shown but which operate and are arranged in identical fashion to that shown in the first embodiment operatively interconnect in the same way as in the first embodiment with the ratchet wheel 39 so that in one position operation of the lever arm assembly 36 with the lever arm extension in this case 40 will effect drive in one direction with the pawl 38 supported by the support frame 31 by reason of its pivot support on a portion of the leg of the yoke 33.

The addition in this case includes a brake member 41 which is pivotally supported about the axle support 42 which is secured relative to the yoke 33 which is a part of the support frame 31 and this drive member 41 is urged into a braking position by reason of spring element 43 which has an end secured by passing through an aperture at 44.

The brake member 41 has a tooth 45 which is adapted to interlock with the teeth 46 of the ratchet wheel 39.

This is inhibited by reason of the leg 47 engaging against the cam face 48 of the drive member 41.

If however the leg 47 reaches positions 49 or 50 then of course this allows the brake member 41 to swing in the direction of the spring pressure caused by 43 which causes an interlock of the ratchet wheel and hence braking of the traction wheel 34 with respect to the support frame 31.

This then describes the preferred embodiment from which it will be seen that by incorporation of a braking means and control means for the braking member operable so that a braking effect is achieved when the lever arm is in an other than selected range of positions then this provides a very good safety factor, which is a significant improvement in relation to the jockey wheel.

### Claims

1. A traction jockey wheel of a type useful for supporting and assisting movement of towed vehicles, and including a wheel supporting frame (2, 31), at least one ground engaging traction wheel (3, 4, 34), and extendible stem (20, 32) to which the towed vehicle can be secured, and a drive mechanism to effect rotation of the traction wheel including a ratchet wheel (7, 8, 39) co-axially secured to the traction wheel, and a pawl (9, 12, 37) and ratchet arranged so that a manually operable lever arm (10, 36) can be used to effect rotation for traction purposes of the traction wheel and can control steering of the traction wheel, the drive mechanism including a brake means (21, 41) and a brake control arrangement (27, 28, 47, 48) characterised in that the brake control arrangement is arranged so that in a first range of positions of the lever arm (10, 36) with respect to the supporting frame (2, 31) the brake means (21, 41) assume a non-braking position (Fig. 3, Fig. 5), and in at least one further position of the lever arm (10, 36) with respect to the supporting frame, the brake means assume a braking position (Fig. 4) in relation to the traction wheel or wheels (3, 4, 34).

2. A traction jockey wheel according to Claim 1, wherein the brake means include a tooth (22, 45) pivotally supported (23, 42) with respect to the supporting frame (2, 31) so that the braking position will be achieved by the said tooth interlocking with the teeth of the ratchet wheel or ratchet wheels (7, 8, 39).

3. A traction jockey wheel according to Claim 2, wherein there are inter-engaging cam means (27, 28, 47, 48) between braking means (21, 41) and the lever arm (10, 36) arranged so as to hold the tooth (22, 45) from an interlocking braking position only when the lever arm is in the said range of positions.

4. A traction jockey wheel according to Claim 1, Claim 2 or Claim 3, wherein the lever arm (10, 36) is pivotable about a horizontal axis (5).

5. A traction jockey wheel according to Claim 4, wherein the said further position is in an uppermost range of positions of pivot of the lever arm.

6. A traction jockey wheel according to Claim 4 or Claim 5, wherein the said further position is or is additionally in a lowermost range of positions of pivot of the lever arm.

7. A traction jockey wheel according to any one of the preceding Claims, wherein a resiliently loaded said pawl (9, 12) is adjustably mounted on the manually operable lever arm (10, 36) and the lever arm is pivotally co-axially supported with respect to the traction wheel or wheels (3, 4, 34).

8. A traction jockey wheel according to any one of the preceding Claims, wherein there is included a resiliently loaded pawl (11, 13, 38) mounted on the supporting frame (2, 31) and effective for engagement against a ratchet wheel or wheels (7, 8, 39) secured to the traction wheel or wheels (3, 4, 34), the pawl being adjustable to impeded motion of the ratchet wheel(s) (7, 8, 39) in either direction of rotation.

9. A vehicle having a traction jockey wheel according to any one of the preceding Claims secured to and supporting its draft frame.

### Revendications

1. Galet de guidage de traction du type utile pour supporter et aider au mouvement de remorques et comprenant un châssis de support de roue (2, 31), au moins une roue de traction engageant le sol (3, 4, 34) et une tige extensible (20, 32) à laquelle peut être fixée la remorque, et un mécanisme d'entraînement pour effectuer la rotation de la roue de traction comprenant une roue à cliquet (7, 8, 39) fixée coaxialement à la roue de traction et un linguet (9, 12, 37) et un cliquet agencés de façon qu'un bras de levier pouvant être commandé à la main (10, 36) puisse être utilisé pour effectuer la rotation dans des buts de traction de la roue de traction et puisse contrôler le guidage de la roue de traction, le mécanisme d'entraînement comprenant un moyen de freinage (21, 41) et un agencement de commande du frein (27, 28, 47, 48), caractérisé en ce que l'agencement de commande du frein est agencé de façon que dans une première plage de positions du bras de levier (10, 36) par rapport au châssis de support (2, 31), le moyen de freinage (21, 41) prenne une position de non freinage (figure 3, figure 5) et dans une autre position du bras de levier (10, 36) par rapport au châssis de support, le moyen de freinage prenne une position de freinage (figure 4) par rapport à la roue ou aux roues de traction (3, 4, 34).

2. Galet de guidage de traction selon la revendication 1, caractérisé en ce que le moyen de freinage comprend une dent (22, 45) supportée pivotante (23, 42) par rapport au châssis de support (2, 31) de façon que la position de freinage soit obtenue par ladite dent venant en engagement avec les dents de la roue à cliquet ou des roues à cliquet.

3. Galet de guidage de traction selon la revendication 2, où il y a des moyens à came en engagement mutuel (27, 28, 47, 48) entre le moyen de freinage (21, 41) et le bras de levier (10, 36) agencés afin de maintenir la dent (22, 45) au loin d'une position de freinage en engagement uniquement quand le bras de levier est dans ladite plage de positions.

4. Galet de guidage de traction selon la revendication 1, la revendication 2 ou la revendication 3, où le bras de levier (10, 36) peut pivoter autour d'un axe horizontal (5).

5. Galet de guidage de traction selon la revendication 4, où l'autre position est dans une plage supérieure de positions de pivotement du bras de levier.

6. Galet de guidage de traction selon la revendication 4 ou la revendication 5, où l'autre position est ou est en plus dans une plage inférieure des positions de pivotement du bras de levier.

7. Galet de guidage de traction selon l'une quelconque des revendications précédentes, où un linguet (9, 12) élastiquement chargé est monté réglable sur le bras de levier à commande manuelle (10, 36) et le bras de levier est supporté coaxialement pivotant par rapport à la roue ou aux roues de traction (3, 4, 34).

8. Galet de guidage detraction selon l'une quelconque des revendications précédentes, où est incorporé un linguet élastiquement chargé (11, 13, 38) monté sur le châssis de support (2, 31) et servant à un engagement contre une roue à cliquet ou des roues (7, 8, 39) fixées à la roue de traction ou aux roues de traction (3, 4, 34), le linguet étant réglable pour empêcher le mouvement de la roue ou des roues à cliquet (7, 8, 39) dans chaque direction de rotation.

9. Véhicule ayant un galet de guidage de traction selon l'une quelconque des revendications précédentes fixé à et supportant son châssis.

**Patentansprüche**

1. Zugvorrichtung zum Abstützen und Lenken eines Anhängers, bestehend aus einem Radstützrahmen (2, 31), mindestens einem auf dem Boden aufstehenden Antriebsrad (3, 4, 34), einem verlängerbaren Schraft (20, 32), an dem der Anhänger befestigbar ist, und einem Antriebsmechanismus zum Verdrehen des Antriebsrades, der ein am Antriebsrad koaxial befestigtes Klinkenrad (7, 8, 39) und eine Sperrklinke (9, 12, 37) umfaßt, die so angeordnet ist, daß ein manuell betätigbarer Hebelarm (10, 36) benutzt werden kann, um das Antriebsrad zu Antriebszwekken zu verdrehen und das Antriebsrad zu lenken, wobei der Antriebsmechanismus eine Bremse (21, 41) und eine Einrichtung (27, 28, 47, 48) zum Steuern der Bremse umfaßt, dadurch gekennzeichnet, daß die Einrichtung zum Steuern der Bremse so angeordnet ist, daß in einem ersten Bereich von Stellungen des Hebelarms (10, 36) in Bezug auf den Stützrahmen (2, 31) die Bremse (21, 41) eine unwirksame Stellung (Fig. 3, Fig. 5) einnimmt, und daß in mindestens einer weiteren Stellung des Hebelarms (10, 36) in Bezug auf den Stützrahmen die Bremse eine wirksame Stellung (Fig. 4) in Bezug auf das Antriebsrad oder die Räder (3, 4, 34) einnimmt.

2. Zugvorrichtung nach Anspruch 1, dadurch gekennzeichnet, daß die Bremse einen Zahn (22, 45) umfaßt, der in Bezug auf den Stützrahmen (2, 31) schwenkbar (bei 23, 42) gelagert ist, so daß dieser Zahn die Bremsstellung einnimmt, indem er mit den Zähnen des oder der Klinkenräder (7, 8, 39) in Sperreingriff gelangt.

3. Zugvorrichtung nach Anspruch 2, dadurch gekennzeichnet, daß zwischen der Bremse (21, 41) und dem Hebelarm (10, 36) Eingriffsnocken (27, 28, 47, 48) derart angeordnet sind, daß sie den Zahn (22, 45) nur dann außer Bremseingriff halten, wenn sich der Hebelarm in dem ersten Bereich von Positionen befindet.

4. Zugvorrichtung nach Anspruch 1, 2 oder 3, dadurch gekennzeichnet, daß der Hebelarm (10, 36) um eine horizontale Achse (5) schwenkbar ist.

5. Zugvorrichtung nach Anspruch 4, dadurch gekennzeichnet, daß sich die besagte weitere Position in einem obersten Bereich von Positionen des Hebelarms befindet.

6. Zugvorrichtung nach Anspruch 4 oder 5, dadurch gekennzeichnet, daß sich die besagte weitere Position in oder zusätzlich in einem untersten Bereich von Positionen des Hebelarms befindet.

7. Zugvorrichtung nach einem der vorhergehenden Ansprüche, dadurch gekennzeichnet, daß eine federbelastete Klinke (9, 12) auf dem manuell betätigbaren Hebelarm (10, 36) einstellbar angeordnet ist und daß der Hebelarm koaxial zu dem oder den Antriebsrädern (3, 4, 34) verschwenkbar ist.

8. Zugvorrichtung nach einem der vorhergehenden Ansprüche, gekennzeichnet durch eine federbelastete Klinke (11, 13, 38), die an dem Stützrahmen (2, 31) gelagert ist und mit dem oder den Klinkenrädern (7, 8, 39) in Eingriff bringbar ist, die an dem oder den Antriebsrädern (3, 4, 34) befestigt sind, wobei die Klinke einstellbar ist, um eine Bewegung der Klinkenräder (7, 8, 39) in einer bestimmten Drehrichtung zu verhindern.

9. Fahrzeug mit einer Zugvorrichtung nach einem der vorhergehenden Ansprüche, die an seinem Rahmen befestigt ist und diesen abstützt.

FIG 1

**FIG 2**

*FIG 3*

**FIG 4**

FIG 5